Europäisches Patentamt

European Patent Office

Office européen des brevets

(11) Publication number: **0 597 189 A2**

# EUROPEAN PATENT APPLICATION

(21) Application number: **93112441.6**

(51) Int. Cl.⁵: **G11B 5/48**, G11B 25/04

(22) Date of filing: **03.08.93**

(30) Priority: **13.11.92 US 975742**

(43) Date of publication of application:
**18.05.94 Bulletin 94/20**

(84) Designated Contracting States:
**DE FR GB IE IT**

(71) Applicant: **Hewlett-Packard Company**
**3000 Hanover Street**
**Palo Alto, California 94304(US)**

(72) Inventor: **Mastache, Mark D.**
**3117 Hillway Drive**
**Boise , Idaho 83702(US)**

(74) Representative: **Baillie, Iain Cameron et al**
**c/o Ladas & Parry**
**Altheimer Eck 2**
**D-80331 München (DE)**

(54) **Low profile rotary actuator structure for a hard disk drive.**

(57)    A single disk (13), rotary actuator (9) disk drive is provided with an armstack comprising two arm structures (9b5) and an actuator motor arm (9e) . Circular openings (9b53) in the mounting ends (9b51) of the arm structures (9b5) and the actuator motor arm (9e) are fitted about and secured to a cylindrical member (9c or 9b1) with the mounting end (9b3) of the actuator motor arm (9e) disposed between the mounting ends (9b51) of the two arm structures (9b5). The cylindrical member (9c or 9b1) is journaled on a spindle (9a) on the base or housing (5a) of the disk drive. In one embodiment of this invention the cylindrical member is a cylindrical tubular member (9c) ball swaged to the mounting ends (9551) of the arm structures (9b5) and the actuator motor arm (9e), and fitted on and adhesively bonded to a common outer bearing race (9b1) of an axial bearing pair (9b) on the spindle (9a). In a second embodiment, representing the presently contemplated best mode for practicing this invention, the cylindrical tubular member is eliminated and the mounting ends of the arm structures and the actuator motor arm are directly adhesively bonded to the common outer bearing race (9b1) of the axial bearing pair (9b). The distal end of the actuator motor arm (9e) mounts a flat coil (9f1) which is part of an axial gap, permanent magnetic, dc rotary actuator motor (9f) called a "voice coil" motor. The rotary actuator (9) axially indexes the armstack with one arm structure (9b5) above the single disk (13) and the other arm structure (9b5) below the single disk (13). A transducer (9d4) on the distal end of each arm structure (9d5) scans the adjacent surface of the disk (13) as the disk (13) rotates.

FIG. 2

Background of the Invention

This invention relates generally to rotary actuator types of disk drives and more particularly to such disk drives of reduced thickness which are applicable in small computers, for example, laptop, palmtop or notebook types of computers or data processors.

Portability of small computers or processors has increased the use and utility of such devices and has indicated a need for increased memory capacity, beyond that afforded by conventional solid state memories, to permit the storage and access of user data during computing or data processing operations. The conventional solid state memory, usually a random access memory (RAM), while affording a compact memory facility, in the range of sizes of such applications, for example, 54 mm wide, 85.6 mm long and 5 mm thick, for interchangeable insertion into a laptop or a notebook type of processor, lacks the storage capacity and addressability for useful user data, beyond that required for operating system and some computer applications, for example.

Rotating memories such as disk drives, afford significantly greater storage capacities than the solid state memories, even in these small sizes, with existing recording techniques, but the mechanics of drives in such small sizes are challenging. Compressing a disk drive to fit within the covers, top and bottom, of a PC Card for example, in the size range stated above, requires compressing the disk spindle and rotary actuator spindle structures to less than 5 mm in thickness or depth. Clearances between a rotating disk and the moving rotary actuator arm structures, and the covers are in very small fractions of millimeters, requiring structurally and dimensionally stable structures for which parts must be manufactured with high precision and designs must provide precise indexing of parts in assembly, since space affording structural provision for after assembly adjustments to achieve proper function does not exist.

As seen in the patent to Levy, 4,754,353 rotary actuator structures typically include an axial bearing pair which funnel the rotary actuator structure on a fixed spindle. Such prior art developments, however, involving disk assemblies of pluralities of disks in a stack do not provide teaching with respect to actuator structures which have a low profile.

Summary of the Invention

A rotary actuator disk drive, which may be fitted into a PC Card and coupled to the electronics of a laptop or notebook type of computer or processor by means of the standard PCMCIA connector for such applications, according to this invention, comprises, a single disk, rotary actuator disk drive, in which provision is made with a unique structural organization of parts in limited space, for the precise axial disposition and alignment of parts to achieve a mechanically functional, low profile, hard disk drive assembly.

The rotary actuator comprises an armstack having two arm structures, the mounting ends of which are provided with cylindrical openings fitted about a cylindrical actuator hub. The arm structures are spaced apart by the mounting end of an actuator motor arm of a voice coil motor. The actuator motor arm also has a cylindrical opening fitted about the cylindrical actuator hub between the two arm structures. In one embodiment, the cylindrical actuator hub is ball swaged to the arm structures and to the actuator motor arm, and is secured to an outer common bearing race of an axial bearing pair on a spindle secured to the disk drive base or support. The spindle has a shoulder upon which the inner race of the bottom bearing of the axial bearing pair is seated; the outer common bearing race of the axial bearing pair has a shoulder upon which the cylindrical actuator hub is seated, and the cylindrical actuator hub has a shoulder upon which the armstack is seated, all being provided for the purpose of axially spacing the armstack with one arm structure above the single disk and the other arm structure below the single disk. A transducer on the distal end of each arm structure scans the adjacent surface of the disk as the disk rotates.

In another embodiment of this invention which is the presently contemplated best mode for practicing this invention, the arm structures and the actuator arm are stacked directly upon the shoulder of the outer common bearing race. The arm structure assembly and actuator arm are aligned and secured by adhesive or thermoplastic bonding.

Brief Description of the Drawings

The invention will be better understood by reference to the following specification when considered in conjunction with the accompanying drawing in which:

Fig. 1 is a plan view with the top cover removed of a rotary actuator disk drive embodying the principles of this invention,

Fig. 2 is a sectional view of a first embodiment of this invention taken in the section plane II-II of Fig.1.

Fig. 3 is an enlarged plan view of an actuator arm of Fig. 1.

Fig. 4 is a sectional view of a second embodiment of a rotary actuator structure, depicting the best mode for practicing this invention.

Fig. 5 illustrates a bonding washer.

Best Mode For Practicing The Invention

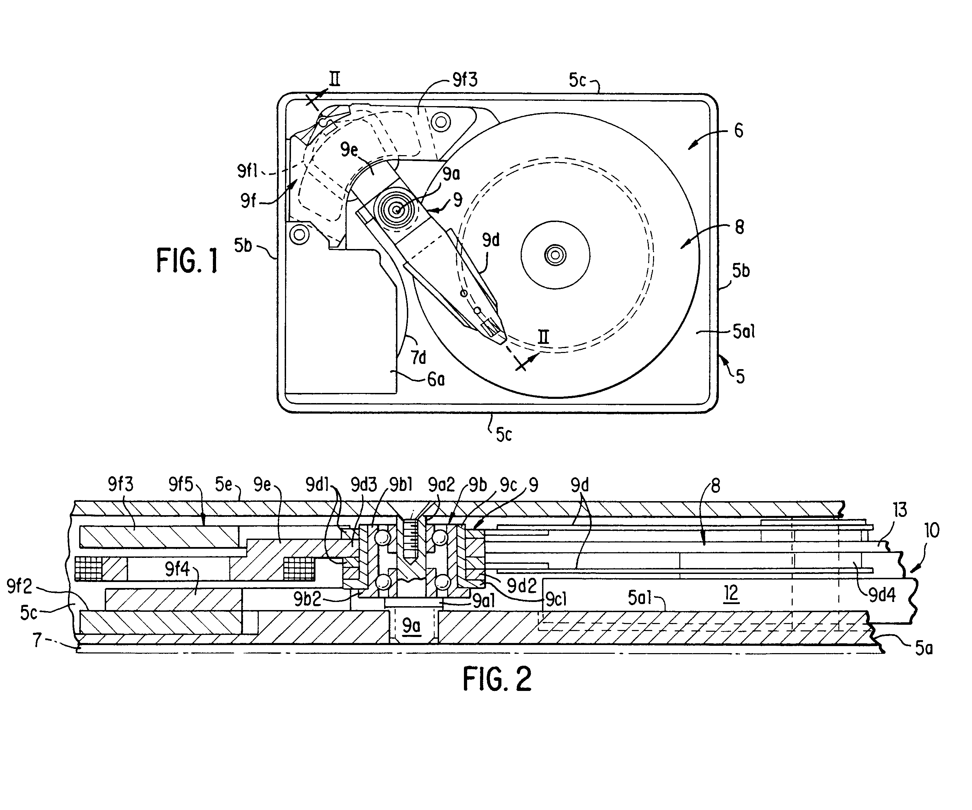

Figs. 1 and 2 illustrate plan and sectional views, respectively, of a small form factor, (1.3 form factor) hard disk drive embodying the principles of this invention. Fig. 1 is drawn to a greatly enlarged scale and Fig. 2 is drawn to a further enlargement of Fig. 1 to permit the illustration of essential detail. The sectional view of Fig. 2 is directed primarily to the rotary actuator spindle structure.

A main frame or base structure 5 of metal, such as aluminum, which is the backbone, i.e., the primary structural member of the disk drive structure, is preferably a single piece of milled or cast metal, which is precision machined, having a base plate 5a, end walls 5b, and side walls 5c. The end walls 5b and the side walls 5c, being an integral part of the base plate 5a, increase the stiffness of the main frame 5 with respect to bending and twisting. This, together with careful recessing of the inner surface 5a1 of the base plate 5a, to generally maintain an overall maximum base plate thickness, provides a support which is stable both in configuration and dimension, in a degree suitable for a rotary actuator type of hard disk drive 6. The base plate 5a has a flat bottom or outer surface 5a2 to which a printed circuit board 7 may be attached. The printed circuit board is illustrated only in dot dash outline in Fig. 2. Where the disk drive is embodied in a PC Card type of structure, the printed circuit board 7 for the disk drive is preferably disposed upon the inner surface 5a1 of the base plate 5a, in a position beside the hard disk drive 6. A flat flexible cable 7d connects the printed circuit board 7 to the hard disk drives 6 via a connector 6a. The printed circuit board conventionally comprises electronic systems and circuits, including a disk controller, providing a processing and control function for translating requests for reading or commands for writing from an electronic digital processor or a host computer, depending upon the application, into track and track sector indications, providing controls for track seeking and track following, and, during track following, providing sector identity and timing controls for read/write modes of operation.

A cover 5e is secured, as by adhesive bonding, to the upper edges of the end walls and the side walls of the main frame or base 5, of the type of Fig. 1, to seal and further stiffen the assembly.

The hard disk drive 6 comprises a hard disk assembly 8 and a rotary actuator assembly 9, as seen in both Figs. 1 and 2.

The hard disk assembly 8 comprises a direct current, disk motor 10 which has a salient pole stator 11 (not shown), and an umbrella shaped, disk motor rotor 12. A hard disk 13 is secured to the motor rotor 12. The details of the direct current disk motor rotor 10 are not illustrated since they are not essential to an understanding of this invention.

Figs. 1 and 2 illustrate the essential details of the rotary actuator assembly 9. The rotary actuator assembly 9 is journaled to rotate about a spindle 9a which threads into the base plate 5a against a spindle flange 9a1. The upper end 9a2 of the spindle 9a has press-fitted, or shrink fitted, thereon, or otherwise securely attached, as by adhesive bonding, the latter being preferred, an axially spaced bearing pair 9b, having a common outer bearing race 9b1 terminating in a shoulder or flange 9b2. The bottom end of the inner race of the bottom bearing of this axial bearing pair seats upon the spindle flange 9a1. This flange 9b2 provides an axial reference on the spindle assembly for axially positioning or indexing an actuator armstack 9d of the rotary actuator assembly 9 in precise relationship with respect to the disk 13.

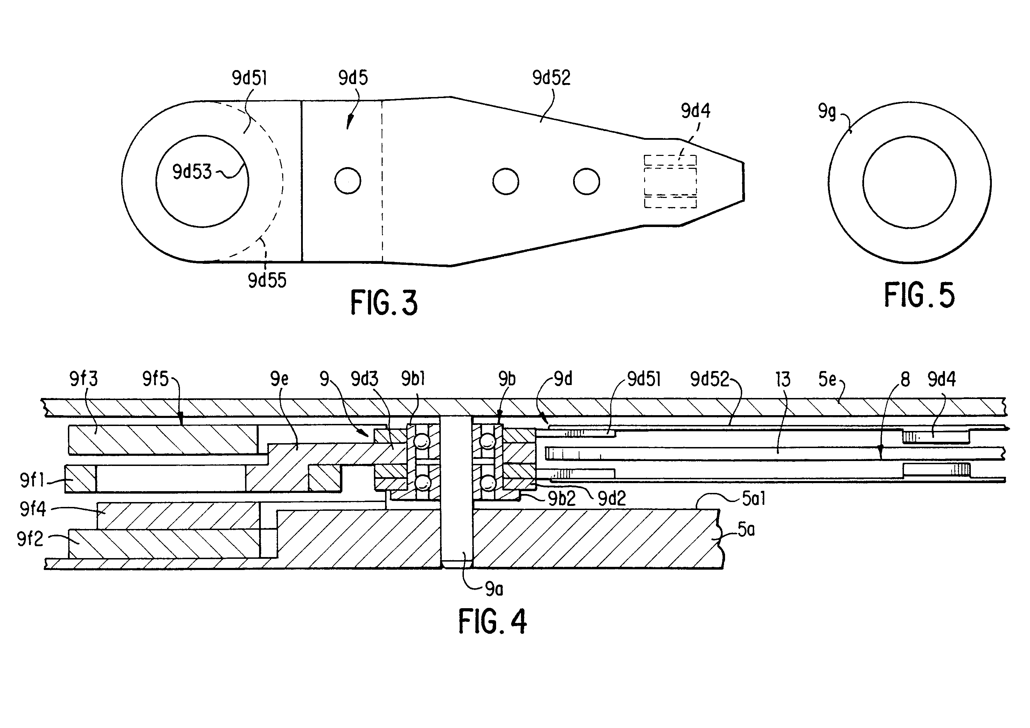

The actuator assembly 9 further comprises a cylindrical, tubular actuator hub 9c which is provided with a flange 9c1 which seats upon the outer bearing race flange 9b2 and mounts the arms 9d5 of the armstack 9d. The two arms 9d5, as seen in Fig. 5, are load beams, each comprising a mounting end 9d51 and a load beam 9d52 which are adhesively bonded together in the region 9d54. A single piece flexible load beam is also contemplated with a ring 9d55 spot welded or bonded to the mounting end 9d51. These mounting ends have circular openings 9d53 which slip over the outer cylindrical surface of the cylindrical, tubular actuator hub 9c. Precise axial disposition and axial spacing of the load beams 9d5 of the armstack 9d on the hub 9c are provided, respectively, by a hub spacer ring 9d2 and a hub spacer ring 9d3, which latter is the mounting end of an actuator motor arm 9e. The mounting ends 9d1 of the load beams 9d5 are fitted on the cylindrical hub 9c in the sequence shown. Before mounting of the cylindrical actuator hub 9c on the outer bearing race 9b1, the rotary actuator assembly 9 is jigged for precise alignment, the alignment being as seen in Fig. 1, and a swaging tool or ball is forced axially through the cylindrical, tubular hub 9c, expanding the hub to frictionally secure the assembly. The cylindrical, tubular hub 9c is thereafter fitted about the outer bearing race 9b1 and seated upon the flange 9b2, in which position the assembly is automatically axially indexed and preferably secured by adhesive bonding.

When assembled, as shown, the two load beams 9d5 are precisely axially indexed to straddle the disk 13, one above the upper surface of the disk and one below the lower surface of the disk. A transducer 9d4 is mounted on the distal end of each load beam arm structure 9d in a spring loaded position to fly on the air bearing at the disk surface and scan the adjacent surface of the disk 13 as the disk rotates.

An axial gap, direct current actuator motor 9f, commonly termed a "voice coil" motor, comprises a flat coil 9f1 which is secured to the distal end of the actuator motor arm 9e and swings in a plane in an arc about the axis of the actuator spindle 9a, between lower and upper poles 9f2 and 9f3 of a permanent magnet stator structure 9f5 secured to the inner face 5a1 of the base plate 5a. A permanent magnetic 9f4, disposed upon the lower pole 9f2, provides a magnetic field which links the coil 9f1 and both poles 9f2 and 9f3 of the permanent magnet stator structure. When the coil 9f1 is energized with direct current of one polarity or the reverse, the electromagnetic field of the coil interacts with the permanent magnet field to move the coil in one direction or the reverse, between the lower and upper poles 9f2 and 9f3, in a planar, arcuate path about the axis of the spindle 9a. Control of the coil current is conventional for track seeking and track following purposes. The upper end 9a2 of the spindle 9a is preferably extended to engage the cover 5e and be secured thereto. This minimizes or eliminates spindle wobble. The cover support which this provides is also useful, since the cover in one application of this invention is only about 0.05 mm thick.

The 5mm thick (0.197 inch) profile assuming flat top and bottom surfaces which are about 0.05 mm thick, compresses the actuator assembly 9 into a space having a depth of about 4 mm.

The presently contemplated best mode for practicing this invention, seen in the embodiment of Fig. 4, offers both improvement and simplification with respect to the embodiment of Fig. 2. Here, the spindle 9a is a 1.0 mm diameter rod which is adhesively bonded to the inner bearing races of the axial bearing pair 9b. The hub 9c is eliminated and the circular openings or holes 9d53 in the mounting ends 9d51 of the load beams 9d5 are reduced in diameter to provide a slip fit over the outer diameter of the outer bearing race 9b1 of the axial bearing pair 9b. The spacers 9d2 and 9d3 and the load beams 9d5 are stacked on the flange 9b2 of the outer bearing race 9b in the sequence shown, which is the same as that of Fig. 2. A thermosetting or thermoplastic bonding washer 9g, Fig. 5, is disposed in each interface in the armstack. The bonding washer 9g is about 0.002 inch thick. The assembly is jigged to achieve the desired alignment, as seen in Fig. 1, and compressed, then subjected to ultrasonic wave energy to achieve ultrabonding at the axial interfaces and between the cylindrical surface of the outer bearing race 9b1 and the arms and spacers of the armstack, the latter due to plastic flow of the bonding material from the interfaces. Thereafter, the bottom end of the spindle 9a of the assembly actuator is aligned or indexed with the hole in the base plate 5a and is press fitted into that hole by applying force to the upper end of the spindle. The upper end of the spindle 9a is preferably adhesively bonded to the inner face of the cover 5e to stabilize the distal end of the spindle and to support the thin cover.

The dimensions in millimeters of essential parts for achieving a hard disk drive of such minimal thickness are:

| Disk 13 | 1.3 form factor |
| --- | --- |
| Thickness of disk 13 | 0.381 |
| Thickness of the cover 5e | 0.500 |
| Diameter of the spindle 9a | 1.000 |
| Diameter of the outer bearing race 9b | 3.000 |
| Clearance between the disk surface and the mounting end 9d51 of load beam 9d5 | 0.277 |
| Thickness of arm 9d5 at the mounting end 9d51 of the load beam at the adhesive bond | 0.231 |
| Bottom surface of the base plate 5 to the bottom surface of the disk 13 | 3.211 |
| Clearance between the load beam and the inner surface of cover 5e | 0.121 |

## Claims

1. A rotary actuator disk drive comprising,
   a. a support (5a) having a surface (5a1);
   b. at least one disk (13) rotatably mounted on said surface (5a1) of said support;
   c. an actuator spindle (9a) projecting from said surface (5a1) of said support (5a);

d. an axially spaced bearing pair (9b) having separate inner bearing races secured to said spindle in axially spaced positions and having a common outer bearing race (9b1);

e. a bearing shoulder (9b2) on the end of said common outer bearing race (9b1) which is adjacent said surface (5a1);

f. at least two arm structures (9b5) having mounting ends (9d51), each mounting end having a circular opening (9b53)therein;

g. a permanent magnet, actuator motor (9f) having a flat coil (9f1);

h. an actuator motor arm (9e) mounting said flat coil (9f1) and having a mounting end (9d3) having a circular opening therein;

i. means securing the mounting ends (9b51) of said arm structures (9b5) and said actuator motor arm (9e) to said common outer bearing race (9b1) with the centers of said circular openings (9b53) aligned with the axis of said spindle (9a2) and with one arm structure (9b5) above said disk (13) and the other arm structure (9b5) below said disk (13), and

j. a transducer (9d4) on the distal end of each arm structure (9b5), in a position adjacent a surface of said at least one disk (13).

2. The invention according to claim 1, in which:
said at least two arm structures (9b5) each comprise a flexible load beam.

3. The invention according to claim 1, in which:
said at least two arm structures (9b5) each comprise a flexible load beam, the mounting end of each load beam having said circular opening (9b53) therein.

4. The invention according to claim 1, in which said means securing the mounting ends (9d51) of said arm structures (9d5) and said actuator motor arm (9e) to said common outer bearing race (9b1) comprises:
a cylindrical, tubular actuator hub having a hub (9c) shoulder (9c1) at one end, said hub fitting over and being secured to said outer bearing race (9b), said hub shoulder (9c1) seating upon said bearing shoulder (9b2), said armstack (9b5) seating upon said hub shoulder.

5. The invention according to claim 4, in which:
said arm structure (9b5) includes a spacer ring (9d2) and is stacked on said hub shoulder (9c1) with said spacer ring (9d2) on said hub shoulder (9c1), one arm structure (9b5) on said spacer ring (9d2), said actuator motor arm (9e) on said one arm structure (9b5) and the other arm structure (9b5) on said actuator motor arm (9e), said mounting being frictionally secured to said cylindrical tubular actuator hub (9c).

6. The invention according to claim 1, in which:
the inner races of said bearing pair (9b) are press fitted on said actuator spindle (9a).

7. The invention according to claim 5, in which:
said cylindrical tubular actuator hub (9c) is swaged to the mounting ends (9d3) at the circular opening (9b53) in each of said at least two actuator arms and said actuator motor arm (9e).

8. The invention according to claim 4, in which:
said cylindrical tubular actuator hub (9c) is adhesively bonded to said common outer bearing race (9b1) of said axial bearing pair (9b).

9. The invention according to claim 1, in which:
said means securing said mounting ends (9d51) of said arm structures (9d5) and said actuator motor arm (9e) to said common outer bearing race (9b1) comprises an adhesive bond between said mounting ends (9b51) and said common outer bearing race (9b1).

10. The invention according to claim 9, in which:
said adhesive bond comprises individual adhesive bonding washers (9g) disposed in the interfaces between the adjacent mounting ends (9b51).

11. The invention according to claim 10, in which:
the adhesive bonding washers are thermoplastic bonding washers (9g).

FIG. 1

FIG. 2

EP 0 597 189 A2

FIG.3

FIG.5

FIG. 4

EP 0 597 189 A2